# EUROPEAN PATENT APPLICATION

(11) **EP 3 731 074 A1**
(43) Date of publication of application: **28.10.2020**
(21) Application number: 19211164.9
(22) Date of filing: 25.11.2019
(51) Int. Cl.: G06F 3/0481, G06F 3/0484, G06F 3/14, G06F 9/451, G09G 5/14

(54) **METHOD AND DEVICE FOR CONTROLLING A WINDOW, AND STORAGE MEDIUM**

(30) Priority: 23.04.2019 CN 201910330359
(71) Applicant: Beijing Xiaomi Mobile Software Co., Ltd., Beijing 100085 (CN)
(72) Inventor: JIN, Chunxiao, Haidian District, Beijing 100085 (CN); XU, Zhiwei, Haidian District, Beijing 100085 (CN)
(74) Representative: Gevers Patents

(57) **Abstract**

Disclosed are a method and device for controlling a window, and a storage medium. The method may include at least one option as follows. A starting operation to start an application (APP) is detected (201, 303, 403, 503, 603, 703, 803, 903). The APP is started (202, 304, 404, 504, 604, 704, 804, 904) when the starting operation is detected. A function button icon of the APP is displayed (203, 305, 405, 505, 605, 705, 805, 905) in a target window. The target window is a sibling of a desktop icon layer window. When an operation of a user, or an event triggered by the user, on electronic equipment changes a stacking relation between the target window and the desktop icon layer window, a layer of the target window may be reset according to the changed stacking relation.

## Description

### TECHNICAL FIELD

The subject disclosure relates to field of computers, and more particularly, to a method and device for controlling a window, and a storage medium.

### BACKGROUND

In related art, a window is a basic unit adapted to displaying information and receiving user input in a Windows operating system. A component of the operating system responsible for managing a function related to a window is referred to as a window manager. A window, i.e., a desktop window, may be generated at initialization of the Windows operating system. During development of a Windows desktop software, to facilitate user operation, a button window corresponding to the software may have to reside in an upper right corner of the desktop window to allow a user to implement interaction through the button window.

### SUMMARY

Embodiments herein provide a method and device for controlling a window, a storage medium, and a computer program, in accordance with claims which follow.

Other features and advantages of embodiments herein may become clear with elaboration made below, or may be learned partially by practicing embodiments herein.

According to an aspect of embodiments herein, a method for controlling a window includes:
detecting a starting operation to start an application (APP);
starting the APP in response to the starting operation being detected; and
displaying a function button icon of the APP in a target window. The target window is a sibling of a desktop icon layer window.

With at least one embodiment herein, a starting operation to start an APP is detected. The APP is started upon detection of the starting operation. A function button icon of the APP is displayed in a target window. The target window is a sibling of a desktop icon layer window. Based on that the target window is a sibling of the desktop icon layer window, when an operation of a user, or an event triggered by the user, on electronic equipment changes a stacking relation between the target window and the desktop icon layer window, a layer of the target window may be reset according to the changed stacking relation, ensuring that the window is always located at a set layer and that the button icon is displayed always at an upper layer of a desktop without blocking or covering another window.

The method may further include:
determining at least one window of the desktop icon layer window or a parent window of the desktop icon layer window; and
creating the target window according to the at least one window.

The target window and the desktop icon layer window may belong to one parent window.

The method may further include:
acquiring a stacking relation between the target window and the desktop icon layer window; and
adjusting a layer of at least one of the target window or the desktop icon layer window according to the stacking relation, such that the target window may be located at a set layer.

The acquiring a stacking relation between the target window and the desktop icon layer window may include: acquiring the stacking relation between the target window and the desktop icon layer window in response to a change in the stacking relation between the target window and the desktop icon layer window.

The method may apply to a primary display being used by a user. The primary display may be determined from multiple displays connected.

According to an aspect of embodiments herein, a device for controlling a window includes a detecting unit, a starting unit, and a displaying unit.

The detecting unit is adapted to detecting a starting operation to start an application (APP).

The starting unit is adapted to starting the APP in response to the starting operation being detected.

The displaying unit is adapted to displaying a function button icon of the APP in a target window. The target window is a sibling of a desktop icon layer window.

The advantages and technical effects of the device herein correspond to those of the method presented above.

The device may further include a determining unit and a creating unit.

The determining unit may be adapted to determining at least one window of the desktop icon layer window or a parent window of the desktop icon layer window.

The creating unit may be adapted to creating the target window according to the at least one window.

The target window and the desktop icon layer window may belong to one parent window.

The device may further include an acquiring unit and an adjusting unit.

The acquiring unit may be adapted to acquiring a stacking relation between the target window and the desktop icon layer window.

The adjusting unit may be adapted to adjusting a layer of at least one of the target window or the desktop icon layer window according to the stacking relation, such that the target window may be located at a set layer.

The acquiring unit may be further adapted to acquiring the stacking relation between the target window and the desktop icon layer window in response to a change in the stacking relation between the target window and the desktop icon layer window.

The device may be a primary display being used by a user. The primary display may be determined from multiple displays connected.

According to an aspect of embodiments herein, a device for controlling a window includes a processor and memory.

The memory stores an instruction executable by the processor.

The processor is adapted to implementing at least part of an aforementioned method for controlling a window.

According to an aspect of embodiments herein, a transitory or non-transitory computer-readable storage medium / information medium has stored thereon instructions of a computer program that, when executed by a processor of a device for controlling a window, cause the device to implement at least part of an aforementioned method for controlling a window.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The options of the method may be determined by computer program instructions.

Consequently, according to an aspect herein, the subject disclosure is further directed to a computer program for executing the options of the method as described above when this program is executed by a computer.

This program can use any programming language and take the form of source code, object code or a code intermediate between source code and object code, such as a partially compiled form, or any other desirable form. The above general description and elaboration below are but exemplary and explanatory, and do not limit the subject disclosure.

### BRIEF DESCRIPTION OF THE DRAWINGS

A drawing here is incorporated in the subject disclosure, constitutes part of the subject disclosure, illustrates at least one embodiment according to the subject disclosure, and together with the subject disclosure, serves to explain the principle of the subject disclosure.
FIG. 1 is a diagram of a source code and an interface for implementing a button window in related art, according to an exemplary embodiment.
FIG. 2 is a flowchart of a method for controlling a window according to an exemplary embodiment.
FIG. 3 is a flowchart of a method for controlling a window according to an exemplary embodiment.
FIG. 4 is a flowchart of a method for controlling a window according to an exemplary embodiment.
FIG. 5 is a flowchart of a method for controlling a window according to an exemplary embodiment.
FIG. 6 is a flowchart of a method for controlling a window according to an exemplary embodiment.
FIG. 7 is a flowchart of a method for controlling a window according to an exemplary embodiment.
FIG. 8 is a flowchart of a method for controlling a window according to an exemplary embodiment.
FIG. 9 is a flowchart of a method for controlling a window according to an exemplary embodiment.
FIG. 10 is a flowchart of a method for controlling a button window according to an exemplary embodiment.
FIG. 11 is a block diagram of a device for controlling a window according to an exemplary embodiment.
FIG. 12 is a block diagram of a device for controlling a window according to an exemplary embodiment.
FIG. 13 is a block diagram of a device for controlling a window according to an exemplary embodiment.
FIG. 14 is a block diagram of a device for controlling a window according to an exemplary embodiment.
FIG. 15 is a block diagram of a device for controlling a window according to an exemplary embodiment.
FIG. 16 is a block diagram of a device for controlling a window according to an exemplary embodiment.

### DETAILED DESCRIPTION

Exemplary embodiments (examples of which are illustrated in the accompanying drawings) are elaborated below. The following description refers to the accompanying drawings, in which identical or similar elements in two drawings are denoted by identical reference numerals unless indicated otherwise. The exemplary implementation modes may take on multiple forms, and should not be taken as being limited to examples illustrated herein. Instead, by providing such implementation modes, embodiments herein may become more comprehensive and complete, and comprehensive concept of the exemplary implementation modes may be delivered to those skilled in the art. Implementations set forth in the following exemplary embodiments do not represent all implementations in accordance with the subject disclosure. Rather, they are merely examples of the apparatus and method in accordance with certain aspects herein as recited in the accompanying claims.

A term used in an embodiment herein is merely for describing the embodiment instead of limiting the subject disclosure. A singular form "a" and "the" used in an embodiment herein and the appended claims may also be intended to include a plural form, unless clearly indicated otherwise by context. Further note that a term "and / or" used herein may refer to and contain any combination or all possible combinations of one or more associated listed items.

Note that although a term such as first, second, third may be adopted in an embodiment herein to describe various kinds of information, such information should not be limited to such a term. Such a term is merely for distinguishing information of the same type. For example, without departing from the scope of the embodiments herein, the first information may also be referred to as the second information. Similarly, the second information may also be referred to as the first information. Depending on the context, a "if" as used herein may be interpreted as "when" or "while" or "in response to determining that".

In addition, described characteristics, structures or features may be combined in one or more implementation modes in any proper manner. In the following descriptions, many details are provided to allow a full understanding of embodiments herein. However, those skilled in the art will know that the technical solutions of embodiments herein may be carried out without one or more of the details; alternatively, another method, component, device, option, etc. may be adopted. Under other conditions, no detail of a known structure, method, device, implementation, material or operation may be shown or described to avoid obscuring aspects of embodiments herein.

A block diagram shown in the accompanying drawings may be a functional entity which may not necessarily correspond to a physically or logically independent entity. Such a functional entity may be implemented in form of software, in one or more hardware modules or integrated circuits, or in different networks and /or processor devices and /or microcontroller devices.

In related art, windows in a Windows operating system may include an overlapped window, a popup window, a child window, etc. A window may be an overlapped window by default. Overlapped windows may refer to multiple windows arranged according to a rule that automatically overlap each other, when no window type is specified. A popup window may refer to a window capable of automatically presenting, in a popup mode, content to be displayed. In general, a popup window may apply to a dialog box. A popup window may have all features of a message box or a dialog box. A popup window may include a frame of a fixed size and a title bar. Two windows may be related to each other, such as by one being a parent/child window of the other, one owning/being owned by the other, one being a sibling of the other, etc. A child window, i.e., a window with a type "child", may have to belong to a parent window. A parent window per se may be at least one of an overlapped window, a popup window, a child window, etc. A parent window may provide a coordinate system for locating a child window. Generally, a coordinate of a location of a child window may be computed according to a location of an upper left corner of a client area of a parent window. A child window may send its notification to a parent window.

A parent/child relation may impact visibility of a window as follows. A child window may be displayed only in a client area of its parent window. Any part of the child window beyond the client area of the parent window is to be cropped off. When a parent window is hidden, all its child windows are hidden. A parent window may be minimized without impacting a state of visibility of a child window. The child window will be minimized along with the parent window, with an attribute WS_VISIBLE of the child window remaining unchanged. An attribute WS_VISIBLE may indicate that a window is visible. A window created may be invisible unless an attribute WS_VISIBLE is added. When a parent window is destroyed, all its child windows will be destroyed.

An owner/owned relation may impact visibility of a window as follows. An owned window may be displayed in front of an owner window that owns the owned window. When an owner window is minimized, any window it owns will be hidden. An owner window may be hidden without impacting a state of visibility of a window it owns. For example, if a window A owns a window B, and the window B owns an window C, when the window A is minimized, the window B may be hidden, while the window C may remain visible. When an owner window is destroyed, any window it owns will be destroyed.

In a sibling relation, all child windows belonging directly to one parent window are siblings of each other. Namely, they are equal and are not divided into masters and slaves. A window manager may manage any child window belonging directly to each parent window using a linked list. The linked list may be referred to as a chain of child windows. An order of a window in the chain of child windows may be an order in which the window is displayed on a screen, the further a window is in the front in a chain of child windows, the earlier the window is displayed. The order may be a Z-order, i.e., a stacking relation among respective windows. A window of a Z-order in the front may block a window of a Z-order in the back. To refresh an area on the screen, in one chain of child windows, a window of a Z-order in the front may be refreshed before a window of a Z-order in the back is refreshed. A parent window may be refreshed before a child window is refreshed.

Presently, in general, a window where a function button is to be located may be created as a popup window. A desktop window is determined as a parent window of a window where a function button is located. A Z-order for the window where the function button is located may be controlled via the parent window. A window where a function button is located may be referred to as a button window. At least one function button may be set in each button window. A function button may be displayed in form of an icon. A user may interact with the screen according to a function button in a button window. A function that may be implemented by a function button in a button window may be set as needed. A popup window is a type of window in the Windows operating system. A Z-order may indicate a location of a window in a stack of windows. Windows may be stacked along a virtual axis Z extending outward from the screen. A desktop window may be a Graphical User Interface displayed on the screen capable of implementing direct interaction with a user. A desktop window may mainly serve to display a desktop icon, a taskbar, etc. A desktop window may include a desktop icon layer window.

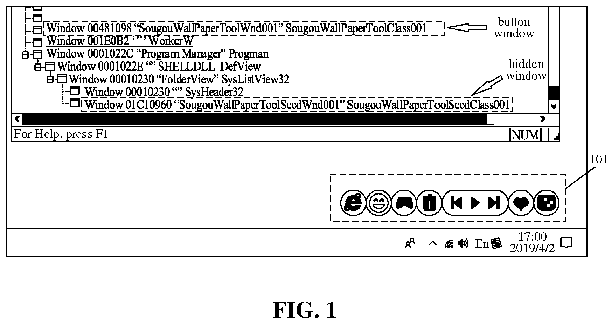

FIG. 1 is a diagram of a source code and an interface for implementing a button window in related art, according to an exemplary embodiment. As shown in FIG. 1, a window 101 may be a button window. The window may be a popup window. A parent window of the window may be a hidden window. The hidden window may be a child window of a desktop icon layer window. Thus, the button window may be prevented from being located above a third-party window. However, a Z-order for the button window may change along with a Z-order for the parent window, i.e., the hidden window. As a parent window of the hidden window is the desktop icon layer window, when the Z-order for the hidden window or another child window has been changed by the desktop icon layer window, the button window may get covered. For example, during use, if a user hovers a cursor of a mouse over an icon on a taskbar, a preview window may appear. When the user moves the mouse onto the preview window, all windows other than the preview window may become invisible for the time being.

In view of this, embodiments herein provide a method for controlling a button window. A layer of the button window may be set. I.e., a parent window and a sibling of the button window may be determined. An event of change may be monitored. A location of the button window may be adapted to the event of change, thereby achieving control over the location of the button window.

Exemplary embodiments (examples of which are illustrated in the accompanying drawings) are elaborated below. The following description refers to the accompanying drawings, in which identical or similar elements in two drawings are denoted by identical reference numerals unless indicated otherwise. Implementations set forth in the following exemplary embodiments do not represent all implementations in accordance with the subject disclosure. Rather, they are merely examples of the device and method in accordance with certain aspects of the subject disclosure as recited in the accompanying claims.

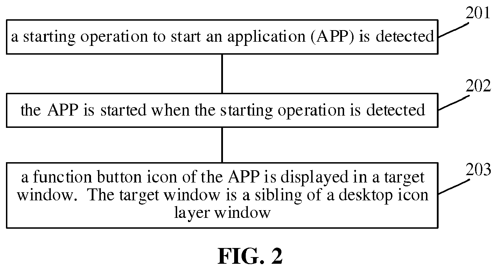

At least one embodiment herein provides a method for controlling a window. FIG. 2 is a flowchart of a method for controlling a window according to an exemplary embodiment. As shown in FIG. 2, the method may include at least one option as follows.

In option 201, a starting operation to start an application (APP) is detected.

In option 202, the APP is started when the starting operation is detected.

In option 203, a function button icon of the APP is displayed in a target window. The target window is a sibling of a desktop icon layer window.

The target window may be a button window, i.e., a window where a function button is located. At least one function button may be placed in a button window. A function button may be displayed in form of an icon, i.e., as a function button icon. A user may interact with the screen according to a function button in a button window. A function that may be implemented by a function button in a button window may be set as needed. The target window is not distinguished from its sibling window as a master or a slave.

The target window may be a sibling of the desktop icon layer window. When an operation of a user, or an event triggered by the user, on electronic equipment changes a stacking relation between the target window and the desktop icon layer window, a layer of the target window may be reset according to the changed stacking relation, ensuring that the window is always located at a set layer and that the button icon is displayed always at an upper layer of a desktop without blocking or covering another window.

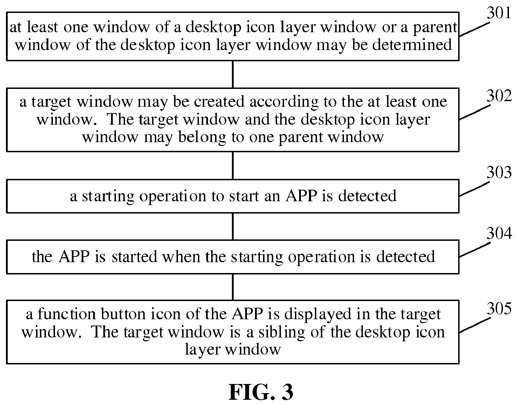

At least one embodiment herein provides a further method for controlling a window. FIG. 3 is a flowchart of a method for controlling a window according to an exemplary embodiment. Before the starting operation to start the APP is detected as shown in FIG. 2, the method herein may further include at least one option as follows. At least one window of the desktop icon layer window or a parent window of the desktop icon layer window may be determined. The target window may be created according to the at least one window. The target window and the desktop icon layer window may belong to one parent window. As shown in FIG. 3, the method may include at least one option as follows.

In option 301, at least one window of a desktop icon layer window or a parent window of the desktop icon layer window may be determined.

For example, at least one of a desktop icon layer window, a target window, or a parent window of the desktop icon layer window may be determined by traversing desktop windows. A target window may be created according to at least one of the desktop icon layer window or the parent window of the desktop icon layer window, such that the target window and the desktop icon layer window belong to one parent window.

In option 302, a target window may be created according to the at least one window. The target window and the desktop icon layer window may belong to one parent window.

In option 303, a starting operation to start an APP is detected.

In option 304, the APP is started when the starting operation is detected.

In option 305, a function button icon of the APP is displayed in the target window. The target window is a sibling of the desktop icon layer window.

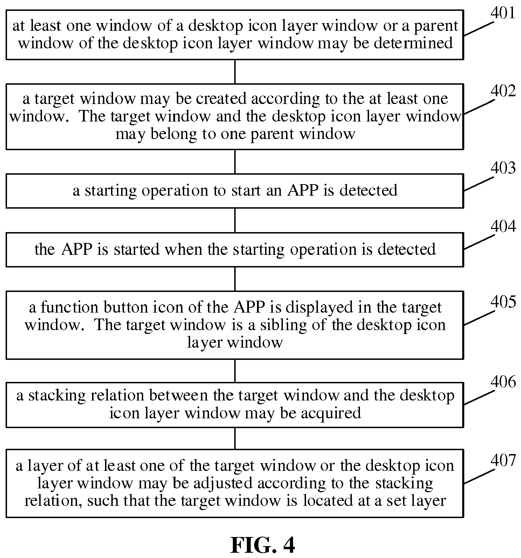

At least one embodiment herein provides a further method for controlling a window. FIG. 4 is a flowchart of a method for controlling a window according to an exemplary embodiment. After the function button icon of the APP is displayed in the target window, which is a sibling of the desktop icon layer window, as shown in FIG. 2 or FIG. 3, the method herein may further include at least one option as follows. A stacking relation between the target window and the desktop icon layer window may be acquired. A layer of at least one of the target window or the desktop icon layer window may be adjusted according to the stacking relation, such that the target window is located at a set layer. In another embodiment, layers of the target window and the desktop icon layer window may be adjusted as well to allow the target window to be located at a set layer. As shown in FIG. 4, the method may include at least one option as follows.

In option 401, at least one window of a desktop icon layer window or a parent window of the desktop icon layer window may be determined.

For example, at least one of a desktop icon layer window, a target window, or a parent window of the desktop icon layer window may be determined by traversing desktop windows. A target window may be created according to at least one of the desktop icon layer window or the parent window of the desktop icon layer window, such that the target window and the desktop icon layer window belong to one parent window.

In option 402, a target window may be created according to the at least one window. The target window and the desktop icon layer window may belong to one parent window.

In option 403, a starting operation to start an APP is detected.

In option 404, the APP is started when the starting operation is detected.

In option 405, a function button icon of the APP is displayed in the target window. The target window is a sibling of the desktop icon layer window.

In option 406, a stacking relation between the target window and the desktop icon layer window may be acquired.

For example, the target window may be at a layer above or below one or more desktop icon layer windows, etc.

In option 407, a layer of at least one of the target window or the desktop icon layer window may be adjusted according to the stacking relation, such that the target window is located at a set layer.

For example, the target window may be at a layer below a first desktop icon layer window and a second desktop icon layer window. Based on the target window and a parent window of a desktop icon layer window thereof, a window manager may adjust the target window to be located at a layer on top of the first desktop icon layer window and the second desktop icon layer window, or adjust the first desktop icon layer window and the second desktop icon layer window to be located at a layer at the bottom of the target window. In either way, the target window may be made to be located at a layer on top of the first window and the second window.

A layer where a window is located may be adjusted by adjusting a Z-order for the window. If there are multiple target windows, the layer and location of each target window may be determined according to a priority of the each target window. The priority may be set as needed. For example, the priority of each target window may be determined according to information on an attribute such as how frequent the each target window is used by a user, a size of an area occupied by the each target window, etc.

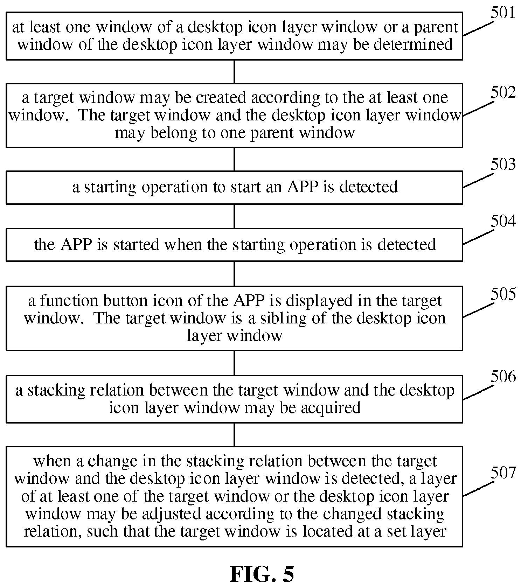

At least one embodiment herein provides a further method for controlling a window. FIG. 5 is a flowchart of a method for controlling a window according to an exemplary embodiment. The layer of at least one of the target window or the desktop icon layer window may be adjusted according to the stacking relation, such that the target window is located at a set layer, as shown in FIG. 4, as follows. When a change in the stacking relation between the target window and the desktop icon layer window is detected, a layer of at least one of the target window or the desktop icon layer window may be adjusted according to the changed stacking relation, to allow the target window to be located at a set layer. As shown in FIG. 5, the method may include at least one option as follows.

In option 501, at least one window of a desktop icon layer window or a parent window of the desktop icon layer window may be determined.

For example, at least one of a desktop icon layer window, a target window, or a parent window of the desktop icon layer window may be determined by traversing desktop windows. A target window may be created according to at least one of the desktop icon layer window or the parent window of the desktop icon layer window, such that the target window and the desktop icon layer window belong to one parent window.

In option 502, a target window may be created according to the at least one window. The target window and the desktop icon layer window may belong to one parent window.

In option 503, a starting operation to start an APP is detected.

In option 504, the APP is started when the starting operation is detected.

In option 505, a function button icon of the APP is displayed in the target window. The target window is a sibling of the desktop icon layer window.

In option 506, a stacking relation between the target window and the desktop icon layer window may be acquired.

For example, the target window may be at a layer above or below one or more desktop icon layer windows, etc.

In option 507, when a change in the stacking relation between the target window and the desktop icon layer window is detected, a layer of at least one of the target window or the desktop icon layer window may be adjusted according to the changed stacking relation, such that the target window is located at a set layer.

The target window may be created to be at a set layer. However, when an operation of a user, or an event triggered by the user, on electronic equipment changes a stacking relation between the target window and the desktop icon layer window, the target window may no longer be located at the set layer. In this case, the layer of at least one of the target window or the desktop icon layer window may have to be adjusted according to the changed stacking relation, to ensure that the target window remains at a set layer.

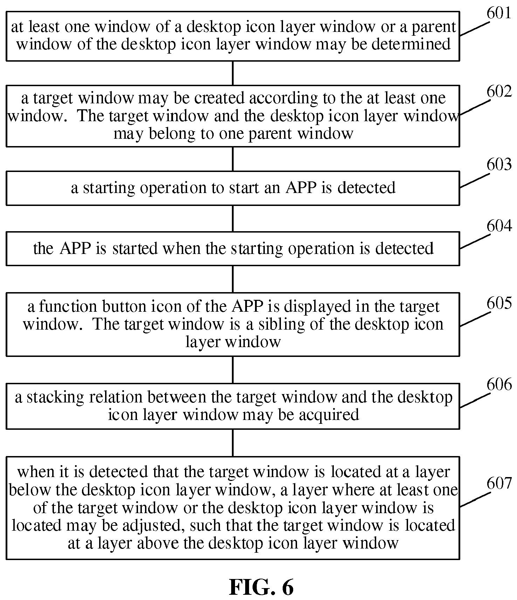

At least one embodiment herein provides a further method for controlling a window. FIG. 6 is a flowchart of a method for controlling a window according to an exemplary embodiment. The layer of at least one of the target window or the desktop icon layer window may be adjusted according to the stacking relation, such that the target window is located at a set layer, as shown in FIG. 4, as follows. When it is detected that the target window is located at a layer below the desktop icon layer window, a layer where at least one of the target window or the desktop icon layer window is located may be adjusted, such that the target window is located at a layer above the desktop icon layer window. As shown in FIG. 6, the method may include at least one option as follows.

In option 601, at least one window of a desktop icon layer window or a parent window of the desktop icon layer window may be determined.

For example, at least one of a desktop icon layer window, a target window, or a parent window of the desktop icon layer window may be determined by traversing desktop windows. A target window may be created according to at least one of the desktop icon layer window or the parent window of the desktop icon layer window, such that the target window and the desktop icon layer window belong to one parent window.

In option 602, a target window may be created according to the at least one window. The target window and the desktop icon layer window may belong to one parent window.

In option 603, a starting operation to start an APP is detected.

In option 604, the APP is started when the starting operation is detected.

In option 605, a function button icon of the APP is displayed in the target window. The target window is a sibling of the desktop icon layer window.

In option 606, a stacking relation between the target window and the desktop icon layer window may be acquired.

For example, the target window may be at a layer above or below one or more desktop icon layer windows, etc.

In option 607, when it is detected that the target window is located at a layer below the desktop icon layer window, a layer where at least one of the target window or the desktop icon layer window is located may be adjusted, such that the target window is located at a layer above the desktop icon layer window.

For example, the set layer may be a layer on top of the desktop icon layer window. When a change in the stacking relation between the target window and the desktop icon layer window is detected, it may further be determined whether the target window remains at a layer on top of the desktop icon layer window. If the target window is no longer located at a layer on top of the desktop icon layer window, the layer of at least one of the target window or the desktop icon layer window may be adjusted according to the changed stacking relation, to ensure that the target window is located at a layer on top of the desktop icon layer window.

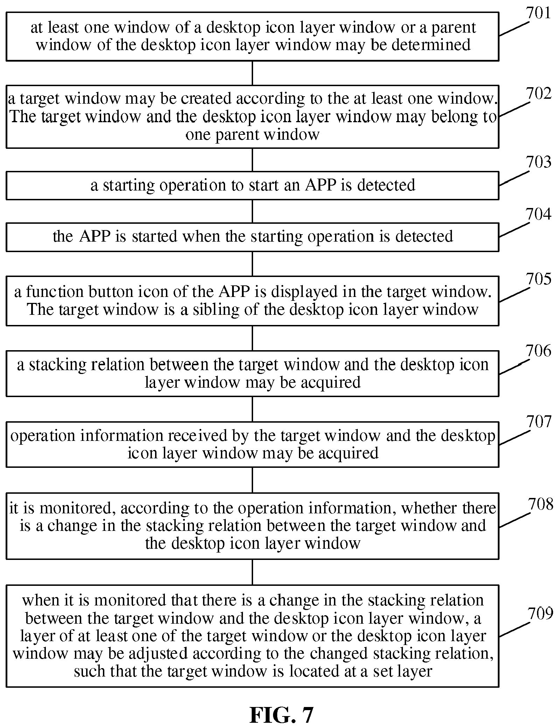

At least one embodiment herein provides a further method for controlling a window. FIG. 7 is a flowchart of a method for controlling a window according to an exemplary embodiment. Before the option that "when a change in the stacking relation between the target window and the desktop icon layer window is detected, a layer of at least one of the target window or the desktop icon layer window may be adjusted according to the changed stacking relation, such that the target window is located at a set layer", as shown in FIG. 5, the method herein may further include at least one option as follows. Operation information received by the target window and the desktop icon layer window may be acquired. It is monitored, according to the operation information, whether there is a change in the stacking relation between the target window and the desktop icon layer window. As shown in FIG. 7, the method may include at least one option as follows.

In option 701, at least one window of a desktop icon layer window or a parent window of the desktop icon layer window may be determined.

For example, at least one of a desktop icon layer window, a target window, or a parent window of the desktop icon layer window may be determined by traversing desktop windows. A target window may be created according to at least one of the desktop icon layer window or the parent window of the desktop icon layer window, such that the target window and the desktop icon layer window belong to one parent window.

In option 702, a target window may be created according to the at least one window. The target window and the desktop icon layer window may belong to one parent window.

In option 703, a starting operation to start an APP is detected.

In option 704, the APP is started when the starting operation is detected.

In option 705, a function button icon of the APP is displayed in the target window. The target window is a sibling of the desktop icon layer window.

In option 706, a stacking relation between the target window and the desktop icon layer window may be acquired.

For example, the target window may be at a layer above or below one or more desktop icon layer windows, etc.

In option 707, operation information received by the target window and the desktop icon layer window may be acquired.

In option 708, it is monitored, according to the operation information, whether there is a change in the stacking relation between the target window and the desktop icon layer window.

In option 709, when it is monitored that there is a change in the stacking relation between the target window and the desktop icon layer window, a layer of at least one of the target window or the desktop icon layer window may be adjusted according to the changed stacking relation, such that the target window is located at a set layer.

The operation information may be information generated by interaction with the screen by a user by triggering an event. For example, the user may trigger a button in a window, etc., by a single click or a double click of a mouse. The window manager may determine an operation performed by the user according to the operation information monitored, and monitor, according to the operation information, whether there is a change in the stacking relation between the target window and the desktop icon layer window.

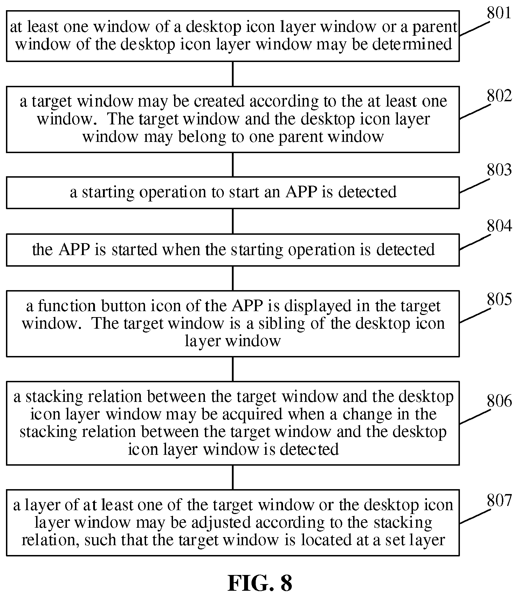

At least one embodiment herein provides a further method for controlling a window. FIG. 8 is a flowchart of a method for controlling a window according to an exemplary embodiment. The stacking relation between the target window and the desktop icon layer window may be acquired, as shown in FIG. 4, as follows. A stacking relation between the target window and the desktop icon layer window may be acquired when a change in the stacking relation between the target window and the desktop icon layer window is detected. As shown in FIG. 8, the method may include at least one option as follows.

In option 801, at least one window of a desktop icon layer window or a parent window of the desktop icon layer window may be determined.

For example, at least one of a desktop icon layer window, a target window, or a parent window of the desktop icon layer window may be determined by traversing desktop windows. A target window may be created according to at least one of the desktop icon layer window or the parent window of the desktop icon layer window, such that the target window and the desktop icon layer window belong to one parent window.

In option 802, a target window may be created according to the at least one window. The target window and the desktop icon layer window may belong to one parent window.

In option 803, a starting operation to start an APP is detected.

In option 804, the APP is started when the starting operation is detected.

In option 805, a function button icon of the APP is displayed in the target window. The target window is a sibling of the desktop icon layer window.

In option 806, a stacking relation between the target window and the desktop icon layer window may be acquired when a change in the stacking relation between the target window and the desktop icon layer window is detected.

For example, the target window may be at a layer above or below one or more desktop icon layer windows, etc.

In option 807, a layer of at least one of the target window or the desktop icon layer window may be adjusted according to the stacking relation, such that the target window is located at a set layer.

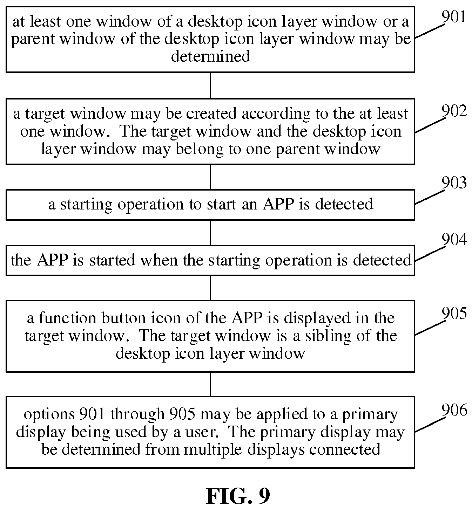

At least one embodiment herein provides a further method for controlling a window. FIG. 9 is a flowchart of a method for controlling a window according to an exemplary embodiment. After the function button icon of the APP is displayed in the target window, which is a sibling of the desktop icon layer window, as shown in FIG. 3, the method herein may be applied to a primary display being used by a user. The primary display may be determined from multiple displays connected. As shown in FIG. 9, the method may include at least one option as follows.

In option 901, at least one window of a desktop icon layer window or a parent window of the desktop icon layer window may be determined.

For example, at least one of a desktop icon layer window, a target window, or a parent window of the desktop icon layer window may be determined by traversing desktop windows. A target window may be created according to at least one of the desktop icon layer window or the parent window of the desktop icon layer window, such that the target window and the desktop icon layer window belong to one parent window.

In option 902, a target window may be created according to the at least one window. The target window and the desktop icon layer window may belong to one parent window.

In option 903, a starting operation to start an APP is detected.

In option 904, the APP is started when the starting operation is detected.

In option 905, a function button icon of the APP is displayed in the target window. The target window is a sibling of the desktop icon layer window.

In option 906, options 901 through 905 may be applied to a primary display being used by a user. The primary display may be determined from multiple displays connected.

For example, if it is detected that multiple displays are connected, all the displays may be enumerated based on a Windows Application Programming Interface (API). A primary display may be determined according to identification information on each display. The identification information may be set as needed, as long as a primary display may be identified by the identification information. After the primary display is determined, an APP may be started in response to detecting a starting operation to start the APP. A function button icon of the APP may be displayed in the target window. The target window may be a sibling of the desktop icon layer window. A location of the target window on the screen of the primary display may be adjusted according to a state of display of the screen of the primary display. For example, when the primary display is in a connected state, the target window may be adjusted to a location corresponding to a state of display of a window on the connected primary display. When the primary display is in a disconnected state, information on the location of the target window on the primary display may be removed. When the primary display is in a cast-to-the-screen state, the target window may be adjusted to a location corresponding to a state of display of a window on a target screen of the cast.

With at least one embodiments herein, a layer of the target window may be set. I.e., a parent window and a sibling of the target window may be determined. An event of change may be monitored. A location of the target window may be adapted to the event of change, thereby achieving control over the location of the target window.

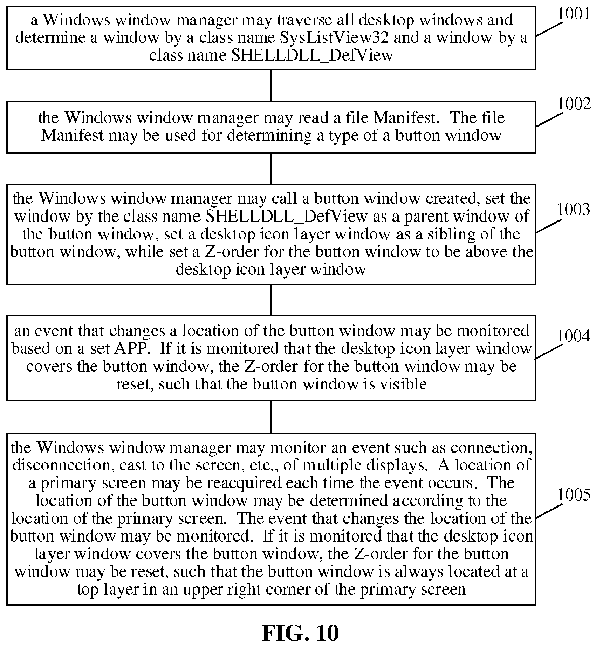

The target window may be a button window, for example. A window where a function button is located may be referred to as a button window. At least one function button may be set in each button window. A function button may be displayed in form of an icon. A user may interact with the screen according to a function button in a button window. A function that may be implemented by a function button in a button window may be set as needed. An embodiment herein further provides a method for controlling a button window. FIG. 10 is a flowchart of a method for controlling a button window according to an exemplary embodiment. As shown in FIG. 10, the method may include at least one option as follows.

In option 1001, a Windows window manager may traverse all desktop windows and determine a window by a class name SysListView32 and a window by a class name SHELLDLL_DefView.

A window by a class name SysListView32 may be a desktop icon layer window. A desktop icon may refer to an icon of a file or an app displayed in the desktop window. For example, the icon of a file may be the icon of a folder, a document, an audio / video file, etc. The icon of an app may be the icon of a game app, an instant messaging app, an audio / video app, a news app, a management app, a payment app, etc. A window by a class name SHELLDLL_DefView may be a parent window of the desktop window, i.e., a window superior to the desktop window. The parent window of the desktop window may serve to respond to a notification sent by the desktop window.

In option 1002, the Windows window manager may read a file Manifest. The file Manifest may be used for determining a type of a button window.

A file Manifest may be configured by a developer for a desktop process according to a scene of application. It may be indicated in the file Manifest that the desktop process supports operating systems Windows7 through Windows10. A transparent child window may be supported by an operating system before Windows8. Although a transparent child window may be supported by an operating system after Windows8, it may have to be determined that the desktop process supports Windows8 and an operating system after Windows8. Software may consist of one or more APPs. A file Manifest may further serve to describe an APP, and manage a name, a version, etc., of a shared parallel component to which the APP is to be bound at run time.

In option 1003, the Windows window manager may call a button window created, set the window by the class name SHELLDLL_DefView as a parent window of the button window, set a desktop icon layer window as a sibling of the button window, while set a Z-order for the button window to be above the desktop icon layer window.

The button window may be a transparent window. The button window called by the Windows window manager may be a program created by a developer as needed.

In option 1004, an event that changes a location of the button window may be monitored based on a set APP. If it is monitored that the desktop icon layer window covers the button window, the Z-order for the button window may be reset, such that the button window is visible.

Sometimes, a window by a class name SHELLDLL_DefView may change a Z-order for its child window, which may cause the desktop icon layer window to cover the button window. The event of change may be an event where a user performs an operation such as opening, closing, or moving a window displayed on the screen, that changes a location or a state of a window. If an event that changes the location of the button window is monitored, a Z-order for each child window of the window by the class name SHELLDLL_DefView may be adjusted according to a message that triggers the event that changes the location, to ensure that the button window is located at the top layer. For example, the window by the class name SysListView32 may be adjusted to be at the bottom layer.

In option 1005, the Windows window manager may monitor an event such as connection, disconnection, cast to the screen, etc., of multiple displays. A location of a primary screen may be reacquired each time the event occurs. The location of the button window may be determined according to the location of the primary screen. The event that changes the location of the button window may be monitored. If it is monitored that the desktop icon layer window covers the button window, the Z-order for the button window may be reset, such that the button window is always located at a top layer in an upper right corner of the primary screen.

The primary screen may refer to a screen of the display being used by the user. All the displays may be enumerated based on a Windows API. The primary display may be determined according to identification information on each display. The identification information may be set as needed, as long as the primary display may be identified by the identification information. The screen of the primary display may then be determined as the primary screen.

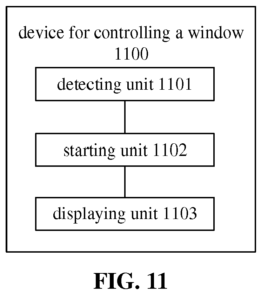

FIG. 11 is a block diagram of a device for controlling a window according to an exemplary embodiment. Referring to FIG. 11, the device for controlling a window 1100 includes a detecting unit 1101, a starting unit 1102, and a displaying unit 1103.

The detecting unit 1101 is adapted to detecting a starting operation to start an application (APP).

The starting unit 1102 is adapted to starting the APP in response to the starting operation being detected.

The displaying unit 1103 is adapted to displaying a function button icon of the APP in a target window. The target window is a sibling of a desktop icon layer window.

The device may be further adapted to, in response to a change in the stacking relation between the target window and the desktop icon layer window being monitored, adjusting a layer of at least one of the target window or the desktop icon layer window according to the changed stacking relation, such that the target window is located at a set layer.

The device may be further adapted to, in response to detecting that the target window is located at a layer below the desktop icon layer window, adjusting a layer where at least one of the target window or the desktop icon layer window is located, such that the target window is located at a layer above the desktop icon layer window.

The device may be a primary display being used by a user. The primary display may be determined from multiple displays connected.

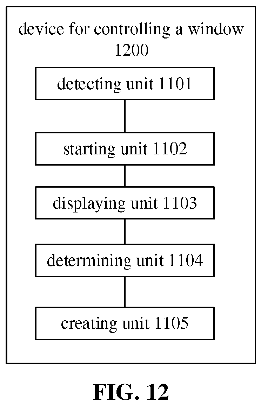

FIG. 12 is a block diagram of a device for controlling a window according to an exemplary embodiment. As shown in FIG. 12, the device 1200 may further include at least one of a determining unit or a creating unit.

The determining unit 1104 may be adapted to determining at least one window of the desktop icon layer window or a parent window of the desktop icon layer window.

The creating unit 1105 may be adapted to creating the target window according to the at least one window.

The target window and the desktop icon layer window may belong to one parent window.

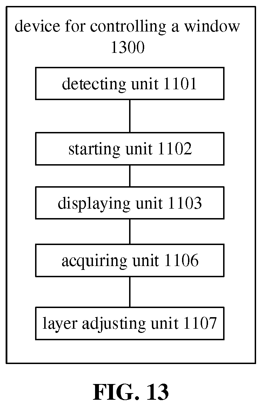

FIG. 13 is a block diagram of a device for controlling a window according to an exemplary embodiment. As shown in FIG. 13, the device 1300 may further include at least one of an acquiring unit or a layer adjusting unit.

The acquiring unit 1106 may be adapted to acquiring a stacking relation between the target window and the desktop icon layer window. The acquiring unit may be adapted to acquiring the stacking relation between the target window and the desktop icon layer window in response to a change in the stacking relation between the target window and the desktop icon layer window.

The layer adjusting unit 1107 may be adapted to adjusting a layer of at least one of the target window or the desktop icon layer window according to the stacking relation, such that the target window is located at a set layer.

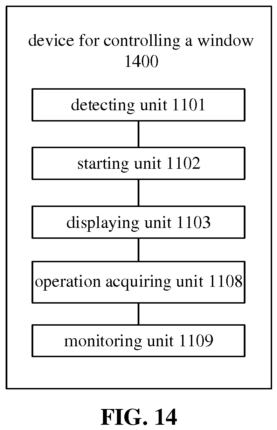

FIG. 14 is a block diagram of a device for controlling a window according to an exemplary embodiment. As shown in FIG. 14, the device may further include at least one of an operation acquiring unit or a monitoring unit.

The operation acquiring unit 1108 may be adapted to acquiring operation information received by the target window and the desktop icon layer window.

The monitoring unit 1109 may be adapted to monitoring, according to the operation information, whether there is a change in the stacking relation between the target window and the desktop icon layer window.

A module of an aforementioned device may perform an operation in a way as elaborated in an embodiment regarding the method. The elaboration is not repeated here.

Accordingly, the subject disclosure further provides a device for controlling a window. The device includes a processor and memory. The memory stores an instruction executable by the processor. The processor is adapted to implementing at least part of any aforementioned method for controlling a window.

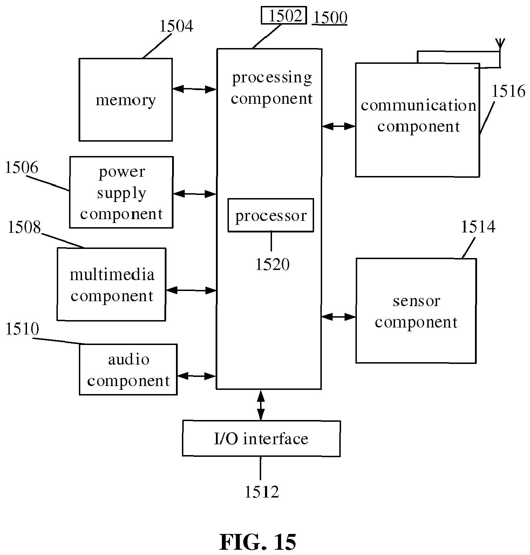

FIG. 15 is a block diagram of a device for controlling a window 1500 according to an exemplary embodiment. For example, the device 1500 may be a mobile phone, a computer, digital broadcasting UE, a message transceiver, a game console, tablet equipment, medical equipment, fitness equipment, a personal digital assistant, etc.

Referring to FIG. 15, the device 1500 may include at least one of a processing component 1502, memory 1504, a power supply component 1506, a multimedia component 1508, an audio component 1510, an Input / Output (I/O) interface 1512, a sensor component 1514, or a communication component 1516.

The processing component 1502 may generally control an overall operation of the device 1500, such as operations associated with display, a telephone call, data communication, a camera operation, a recording operation, etc. The processing component 1502 may include one or more processors 1520 to execute instructions so as to complete all or part of the options of an aforementioned method. In addition, the processing component 1502 may include one or more modules to facilitate interaction between the processing component 1502 and other components. For example, the processing component 1502 may include a multimedia module to facilitate interaction between the multimedia component 1508 and the processing component 1502.

The memory 1504 may be adapted to storing various types of data to support the operation at the device 1500. Examples of such data may include instructions of any application or method adapted to operating on the device 1500, contact data, phonebook data, messages, pictures, videos, etc. The memory 1504 may be realized by any type of transitory or non-transitory storage equipment or a combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, a magnetic disk, a compact disk, etc.

The power supply component 1506 may supply electric power to various components of the device 1500. The power supply component 1506 may include a power management system, one or more power sources, and other components related to generating, managing, and distributing electricity for the device 1500.

The multimedia component 1508 may include a screen that provides an output interface between the device 1500 and a user. The screen may include a Liquid Crystal Display (LCD) and a Touch Panel (TP). If the screen includes a TP, the screen may be realized as a touch screen to receive a signal input by a user. The TP may include one or more touch sensors for sensing touch, slide, and gestures on the TP. The one or more touch sensors not only may sense the boundary of a touch or slide move, but also detect the duration and pressure related to the touch or slide move. The multimedia component 1508 may include at least one of a front camera or a rear camera. When the device 1500 is in an operation mode such as a photographing mode or a video mode, at least one of the front camera or the rear camera may receive external multimedia data. Each of the front camera or the rear camera may be a fixed optical lens system or may have a focal length and be capable of optical zooming.

The audio component 1510 may be adapted to outputting and / or inputting an audio signal. For example, the audio component 1510 may include a microphone (MIC). When the device 1500 is in an operation mode such as a call mode, a recording mode, a voice recognition mode, etc., the MIC may be adapted to receiving an external audio signal. The received audio signal may be further stored in the memory 1504 or may be sent via the communication component 1516. The audio component 1510 may further include a loudspeaker adapted to outputting the audio signal.

The I/O interface 1512 may provide an interface between the processing component 1502 and a peripheral interface module. Such a peripheral interface module may be a keypad, a click wheel, a button, etc. Such a button may include but is not limited to at least one of a homepage button, a volume button, a start button, or a lock button.

The sensor component 1514 may include one or more sensors for assessing various states of the device 1500. For example, the sensor component 1514 may detect an on/off state of the device 1500 and relative positioning of components such as the display and the keypad of the device 1500. The sensor component 1514 may further detect a change in the position of the device 1500 or of a component of the device 1500, whether there is contact between the device 1500 and a user, the orientation or acceleration / deceleration of the device 1500, a change in the temperature of the device 1500, etc. The sensor component 1514 may include a proximity sensor adapted to detecting existence of a nearby object without physical contact. The sensor component 1514 may further include an optical sensor such as a Complementary Metal-Oxide-Semiconductor (CMOS) or a Charge-Coupled-Device (CCD) image sensor used in an imaging application. The sensor component 1514 may further include an acceleration sensor, a gyroscope sensor, a magnetic sensor, a pressure sensor, a temperature sensor, etc.

The communication component 1516 may be adapted to facilitating wired or wireless communication between the device 1500 and other equipment. The device 1500 may access a wireless network based on a communication standard such as Wi-Fi, 2G, 3G..., or a combination thereof. The communication component 1516 may broadcast related information or receive a broadcast signal from an external broadcast management system via a broadcast channel. The communication component 1516 may include a Near Field Communication (NFC) module for short-range communication. For example, the NFC module may be based on technology such as Radio Frequency Identification (RFID), Infrared Data Association (IrDA), Ultra-Wideband (UWB) technology, Bluetooth (BT), etc.

The device 1500 may be realized by one or more electronic components such as an Application Specific Integrated Circuit (ASIC), a Digital Signal Processor (DSP), a Digital Signal Processing Device (DSPD), a Programmable Logic Device (PLD), a Field Programmable Gate Array (FPGA), a controller, a microcontroller, a microprocessor, etc., to implement an aforementioned method.

A transitory or non-transitory computer-readable storage medium including instructions, such as memory 1504 including instructions, may be provided. The instructions may be executed by the processor 1520 of the device 1500 to implement an aforementioned method. For example, the transitory or non-transitory computer-readable storage medium may be Read-Only Memory (ROM), Random Access Memory (RAM), Compact Disc Read-Only Memory (CD-ROM), a magnetic tape, a floppy disk, optical data storage equipment, etc.

Accordingly, the subject disclosure further provides a transitory or non-transitory computer-readable storage medium which may include instructions. When executed by a processor of a device for controlling a window, the instructions may cause the device to implement an aforementioned method for controlling a window. The method includes at least one option as follows.

A stacking relation between a target window and each sibling of the target window is acquired. The target window and the each sibling are child windows belonging to one parent window.

A layer of at least one of the target window or the each sibling is adjusted according to the stacking relation, such that the target window is located at a set layer.

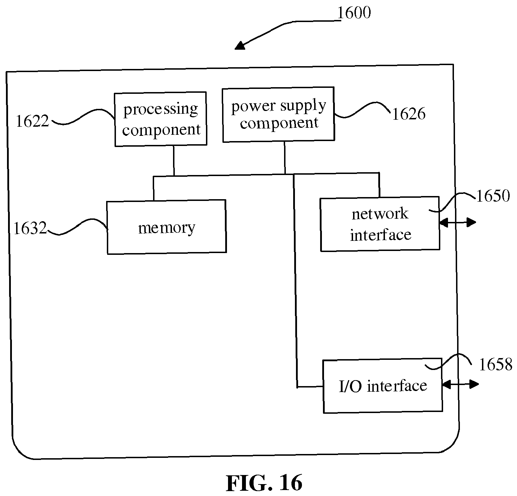

FIG. 16 is a block diagram of a device for controlling a window 1600, according to an exemplary embodiment. For example, the device 1600 may be provided as equipment with a processing capability. Referring to FIG. 16, the device 1600 may include a processing component 1622 (which per se may include one or more processors), and a memory resource indicated by memory 1632, adapted to storing instructions, such as an APP, executable by the processing component 1622. An APP stored in the memory 1632 may include one or more modules each corresponding to a set of instructions. In addition, the processing component 1622 may be adapted to executing instructions to execute at least part of an aforementioned method for controlling a window.

The device 1600 may further include a power supply component 1626 adapted to managing the power supply of the device 1600, a wired or wireless network interface 1650 adapted to connecting the device 1600 to a network, and an I/O interface 1658. The device 1600 may operate based on an operating system stored in the memory 1632, such as Windows ServerTM, Mac OS XTM, UnixTM, LinuxTM, FreeBSDTM, or the like.

The processor may be a Central Processing Unit (CPU), a general purpose processor, a Digital Signal Processor (DSP), an Application Specific Integrated Circuit (ASIC), and/or the like. A general purpose processor may be a microprocessor, any conventional processor, and/or the like. Aforementioned memory may be a Read-Only Memory (ROM), a Random Access Memory (RAM), a flash memory, a hard disk, a solid state disk, and/or the like. A Subscriber Identity Module (SIM) card, also referred to as a smart card, may have to be installed on a digital mobile phone before the phone can be used. Content, such as information on a user of the digital mobile phone, an encryption key, a phonebook of the user, may be stored on the computer chip. An option of the method according to any combination of embodiments herein may be executed by a hardware processor, or by a combination of hardware and software modules in the processor.

Herein by "multiple", it may mean two or more. A term "and /or" may describe an association between associated objects, including three possible relationships. For example, by A and /or B, it may mean that there may be three cases, namely, existence of but A, existence of both A and B, or existence of but B. A slash mark "/" may generally denote an "or" relationship between two associated objects that come respectively before and after the mark per se.

Other embodiments according to the subject disclosure will be apparent to one skilled in the art after he/she has considered the subject disclosure and practiced the invention disclosed herein. The subject application is intended to cover any variation, use, or adaptation of the subject disclosure following the general principle of the subject disclosure and including such departures from the subject disclosure as come within knowledge or customary practice in the art. The subject disclosure and its embodiments are intended to be exemplary only, with a true scope and spirit of the subject disclosure being indicated by the appended claims.

## Claims

1. A method for controlling a window, comprising:
detecting (201, 303, 403, 503, 603, 703, 803, 903) a starting operation to start an application, APP;
starting (202, 304, 404, 504, 604, 704, 804, 904) the APP in response to the starting operation being detected; and
displaying (203, 305, 405, 505, 605, 705, 805, 905) a function button icon of the APP in a target window, the target window being a sibling of a desktop icon layer window.

2. The method of claim 1, further comprising:
determining (301, 401, 501, 601, 701, 801, 901) at least one window of the desktop icon layer window or a parent window of the desktop icon layer window; and
creating (302, 402, 502, 602, 702, 802, 902) the target window according to the at least one window,
wherein the target window and the desktop icon layer window belong to one parent window.

3. The method according to any one of the preceding claims, further comprising:
acquiring (406, 506, 606, 706, 806) a stacking relation between the target window and the desktop icon layer window; and
adjusting (407, 807) a layer of at least one of the target window or the desktop icon layer window according to the stacking relation, such that the target window is located at a set layer.

4. The method of claim 3, wherein the acquiring a stacking relation between the target window and the desktop icon layer window comprises:
acquiring (806) the stacking relation between the target window and the desktop icon layer window in response to a change in the stacking relation between the target window and the desktop icon layer window.

5. The method according to any one of the preceding claims, applying (906) to a primary display being used by a user, the primary display being determined from multiple displays connected.

6. A device (1100, 1200, 1300, 1400) for controlling a window, comprising a detecting unit (1101), a starting unit (1102), and a displaying unit (1103),
wherein the detecting unit (1101) is adapted to detect a starting operation to start an application, APP,
wherein the starting unit (1102) is adapted to start the APP in response to the starting operation being detected,
wherein the displaying unit (1103) is adapted to display a function button icon of the APP in a target window, the target window being a sibling of a desktop icon layer window.

7. The device (1100, 1200, 1300, 1400) of claim 6, further comprising a determining unit (1104) and a creating unit (1105),
wherein the determining unit (1104) is adapted to determine at least one window of the desktop icon layer window or a parent window of the desktop icon layer window,
wherein the creating unit (1105) is adapted to create the target window according to the at least one window,
wherein the target window and the desktop icon layer window belong to one parent window.

8. The device (1100, 1200, 1300, 1400) according to claim 6 or 7, further comprising an acquiring unit (1106) and an adjusting unit (1107),
wherein the acquiring unit (1106) is adapted to acquire a stacking relation between the target window and the desktop icon layer window,
wherein the adjusting unit (1107) is adapted to adjust a layer of at least one of the target window or the desktop icon layer window according to the stacking relation, such that the target window is located at a set layer.

9. The device (1100, 1200, 1300, 1400) of claim 8, wherein the acquiring unit is further adapted to acquiring the stacking relation between the target window and the desktop icon layer window in response to a change in the stacking relation between the target window and the desktop icon layer window.

10. The device (1100, 1200, 1300, 1400) according to any one of the preceding claims 6 to 9, being a primary display being used by a user, the primary display being determined from multiple displays connected.

11. A device (1500) for controlling a window, comprising a processor (1520) and memory (1504),
wherein the memory (1504) stores an instruction executable by the processor (1520),
wherein the processor (1520) is adapted to implementing at least part of the method of any one of claims 1 through 5.

12. A computer-readable storage medium having stored thereon instructions that, when executed by a processor of a device for controlling a window, cause the device to implement an aforementioned method according to any one of the preceding claims 1 to 5.

13. A computer program comprising instructions for executing the method according to any one of the preceding claims 1 to 5 when said program is executed by a computer.
